# EUROPÄISCHE PATENTSCHRIFT

(11) **EP 3 972 742 B1**
(45) Veröffentlichungstag und Bekanntmachung des Hinweises auf die Patenterteilung: **03.06.2026**
(21) Anmeldenummer: 20736909.1
(22) Anmeldetag: 30.04.2020
(51) Int. Cl.: B05C 1/02, H01M 10/04, B05C 9/12

(54) **VORRICHTUNG ZUM BENETZEN VON AUFNAHME- UND EINFÜHRHILFEN UND/ODER BEHÄLTER- ODER RAHMENKONSTRUKTIONEN FÜR DIE VERBESSERTE ZUORDNUNG VON PLATTENPAKETEN INNERHALB EINER KOMPLEXEN FERTIGUNGSANLAGE**
DEVICE FOR WETTING RECEIVING AND INSERTING AIDS AND/OR CONTAINER OR FRAME CONSTRUCTIONS FOR THE IMPROVED ASSIGNMENT OF PLATE ASSEMBLIES INSIDE A COMPLEX PRODUCTION INSTALLATION
DISPOSITIF POUR HUMIDIFIER DES AIDES DE RÉCEPTION ET D'INTRODUCTION ET/OU DES STRUCTURES DE CONTENANT OU DE CADRE POUR L'ATTRIBUTION AMÉLIORÉE DE PAQUETS DE PLAQUES À L'INTÉRIEUR D'UNE INSTALLATION DE PRODUCTION COMPLEXE

(30) Priorität: 30.04.2019 DE 102019003074
(43) Veröffentlichungstag der Anmeldung: 30.03.2022
(73) Patentinhaber: Schmitt Prof. Möhlmann & Collegen Wirtschaftskanzlei - Insolvenzverwalter Aktiengesellschaft, 08056 Zwickau (DE)
(72) Erfinder: NOFFKE, Falk, 08141 Reinsdorf (DE)
(74) Vertreter: Schneiders & Behrendt Bochum
(86) Internationale Anmeldenummer: PCT/DE2020/000085
(87) Internationale Veröffentlichungsnummer: WO 2020/221383

(56) Entgegenhaltungen:
- WO-A1-2004/080610
- JP-A- H0 330 254
- US-A1- 2006 045 981
- US-A1- 2017 256 824
- US-A1- 2018 257 112

## Beschreibung

Die Erfindung betrifft eine Vorrichtung für das Benetzen der Innenflächen von Aufnahme- und Einfuhrhilfen und/oder Behälter- oder Rahmenkonstruktionen, um eine verbesserte Aufnahme bzw. Zuordnung von anschließend in diese Behälter einzubringende Vorrichtungen, wie beispielsweise Plattenpakete für die Batteriefertigung zu schaffen.

Auf Grund der bereitstehenden minimalen Platzverhältnisse innerhalb einer komplexen Fertigungsanlage steht häufig für die Realisierung zusätzlicher Maßnahmen zur Verbesserung der Fertigungsabläufe sehr wenig Platz zur Verfügung. Ebenso müssen Sicherheitsmaßnahmen innerhalb der Fertigungsanlage berücksichtigt werden, welche ebenfalls gesonderten Platz und zusätzliche technische Maßnahmen benötigen. So ist bei üblichen Sprühanlagen zum Benetzen oder Beschichten mit Gleitmitteln zusätzlich der Explosionsschutz innerhalb der Fertigungsanlage zu berücksichtigen.

Die US 2006/045 981 A1 beschreibt eine Benetzungsvorrichtung nach dem Oberbegriff der Ansprüche 1 und 2. Aus der WO 2004/080 610 A1 geht eine Beschichtungsvorrichtung hervor, bei der die Beschichtung mit einer an einem Roboter geführten Rolle erfolgt. Die US 2017/256 824 A1 beschreibt eine Vorrichtung zur Ausrüstung von Batteriegehäusen mit Batterieplatten. Ein Verfahren zur Herstellung zylindrischer Batterien geht aus der JP H03 30254 A hervor.

Aus der US 2018/257112 A1 ist eine Benetzungseinrichtung gemäß Oberbegriff der Ansprüche 1 und 2 bekannt.

Aus diesem Grund liegt der vorliegenden Erfindung die Aufgabe zu Grunde, eine zusätzlich Vorrichtung zum Benetzen der Innenflächen einer Behälter- oder Rahmenkonstruktion außerhalb des eigentlichen Fertigungsprozesses zu schaffen, welche mit wenig Platzbedarf und ohne Explosionsschutzmaßnahmen auskommt. Zudem soll die erfindungsgemäße Vorrichtung gleichzeitig die Säuberung der betreffenden Innenflächen von Verunreinigungen und Abriebresten dienen.

Erfindungsgemäß wird die Aufgabe durch die Merkmale des Anspruchs 1 oder 2 gelöst, wobei die vorteilhaften Ausgestaltungen in den Unteransprüchen beschrieben sind.

Danach besteht eine Vorrichtung zum Benetzen von Einfuhrhilfen für die verbesserte Zuordnung von Plattenpaketen, wobei die Vorrichtung selbst außerhalb der komplexen Fertigungsanlage an der Wartungs- und Ruheposition der Einfuhrhilfen angeordnet ist, aus einer Positionsvorrichtung zum lagegenauen Positionieren der weiterhin angeordneten Benetzungsvorrichtung an den zu benetzenden Innenwänden der Einfuhrhilfen.

Weiterhin besteht die erfindungsgemäße Vorrichtung aus einem Versorgungssystem für das Benetzungsmittel. Als Benetzungsmittel wird vorteilhafter Weise flüssiges PTFE als Gleitverbesserungsmittel eingesetzt.

Die Positioniervorrichtung ist in einer ersten Variante als Linearachssystem ausgebildet ist, welche so konstruiert ist, das sowohl horizontal als auch vertikal steuerbare Bewegungsabläufen durchgeführt werden können, um die Benetzungsvorrichtung an die zu benetzenden Flächen zu positionieren.

Am Ende der Positioniervorrichtung ist eine Beschichtungsbürste angeordnet, welche mit einem Benetzungsmittel-Versorgungssystem in Verbindung steht.

Eine Reinigungsvorrichtung für die Beschichtungsbürste als zusätzlicher Behälter zum rotierenden Abtrennen der Benetzungs-, Verunreinigungs- und Abriebrückstände ist ebenfalls angeordnet. Dabei kann die Bürste rotierend und/oder in einer im Behälter angeordneten Reinigungsflüssigkeit zum Abspülen der Rückstände gereinigt werden.

Die Anordnung der Vorrichtung zum Benetzen der Einführhilfen außerhalb des eigentlichen Fertigungsprozesses und dort im Bereich der Ruhe- und/oder Wartungsstation der Hilfsvorrichtungen und Behälter bietet die Möglichkeit eines im gestörten Fertigungsablaufes.

Die erfindungsgemäße Vorrichtung kann in einer weiteren Variante so ausgebildet sein, das die Positioniervorrichtung als Roboter-Handlingsystem ausgebildet ist und die Benetzungsbürste am Roboterkopf so angeordnet ist, das diese über steuerbare Bewegungsabläufe des Roboterkopfes und -armes an die zu benetzenden Stellen der Aufnahme- und Einführhilfen und/oder Behälter oder Rahmenkonstruktion zum Greifen und Einboxen von Plattenpakten in die Plattenbehälter oder - rahmen herangeführt und positioniert werden kann.

Auch hier ist die Anordnung des Roboter-Handlingsystem außerhalb des eigentlichen Fertigungsprozesses und dort im Bereich der Ruhe- und/oder Wartungsstation der Hilfsvorrichtungen und Behälter vorgesehen.

Die Benetzungsbürste selbst ist zum Rotieren mit einem zusätzlichen Antrieb ausgestattet Außerdem kann die Benetzungsbürste als waagerecht oder senkrecht angeordnete und/oder als schwenkbare Bürstenwalze ausgebildet sein.

Mit der Walzenbürste können größere Bereiche der zu benetzenden Flächen effizienter benetzt werden.

Vorteilhafter Weise sind die Benetzungsbürsten oder Bürstenwalzen mit einem der Aufnahme des Benetzungsmittels ausgestatteten eigenen Aufnahme- und Abgabesystem ausgestattet ist. Dadurch ist der Einsatz des Benetzungsmittels verlustarm und effizient zu gestalten.

Zur Versorgung der Bürste mit Benetzungsmittel ist ein oberhalb der Bürste angeordnetes Aufnahme-/Abgabesystem zur Aufnahme und zum Übertrag des Benetzungsmittels auf die Borsten bzw. den Belag der Bürsten ausgebildet.

Die Aufnahme des Benetzungsmittels kann jedoch auch in der Bürste selbst erfolgen und das Benetzungsmittel gelangt über Bohrungen von Innen an die Borsten bzw. den Belag der Benetzungsbürste.

Auch bei dieser Variante ist eine Reinigungsvorrichtung für die Beschichtungsbürste als zusätzlicher Behälter zum rotierenden Abtrennen der Benetzungs-, Verunreinigungs- und Abriebrückstände vorgesehen. Dabei kann die Bürste auch in diesem Fall sowohl rotierend und/oder in einer im Behälter angeordneten Reinigungsflüssigkeit zum Abspülen der Rückstände gereinigt werden.

Beide Varianten führen auch zu einem sehr effizienten verlustarmen Einsatz des Benetzungsmittels und auch dazu, dass auf sonst bei beispielsweise dem Einsatz von Sprühvorrichtungen übliche Explosionsschutzmaßnahmen verzichtet werden kann.

Zur kontinuierlichen Versorgung der Benetzungsbürste mit Benetzungsmittel ist die Bürste direkt über eine Ringleitung mit einem vorgeschalteten Vorratsbehälter verbunden. Der Vorratsbehälter wird dazu mit Druck beaufschlagt und verfügt zur Qualitätssicherung des Benetzungsmittels mit einer Durchmischungsvorrichtung, beispielsweise in Form eines Rührwerkes.

Die Erfindung soll anhand eines Ausführungsbeispiels näher erläutert werden.

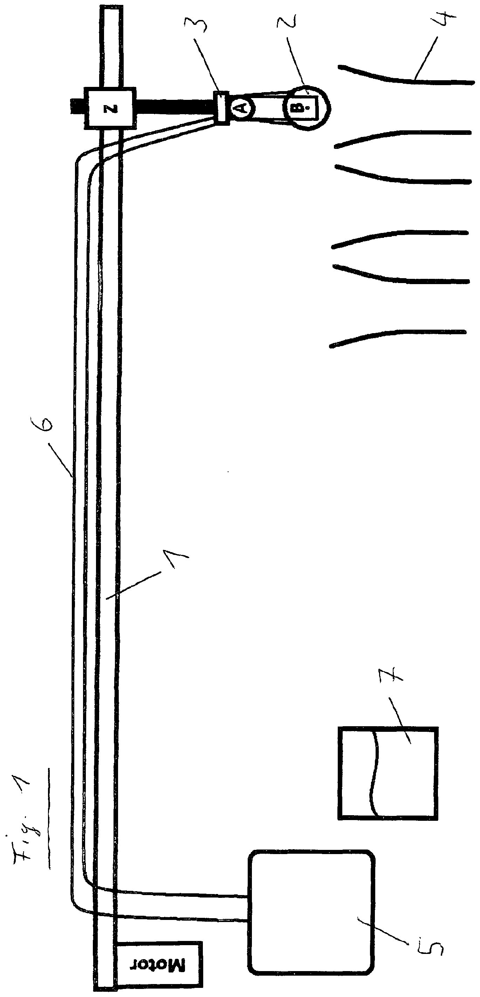

Dazu zeigen
Fig. 1 eine schematische Draufsicht einer Positioniervorrichtung (1) als Linearachssystem (1) mit Antriebsmotor für die lineare horizontale und vertikale Bewegung der Positioniereinrichtung mit der daran angeordneten Benetzungsbürste (2), dem Aufnahme- und Abgabesystem (3) für das Benetzungsmittel, der Ringleitung (6) zwischen dem Vorratsbehälter (5) für das Benetzungsmittel sowie den zu benetzenden Einführhilfen 4 und dem Reinigungsbehälter 7 für die Beschichtungsbürste 2;

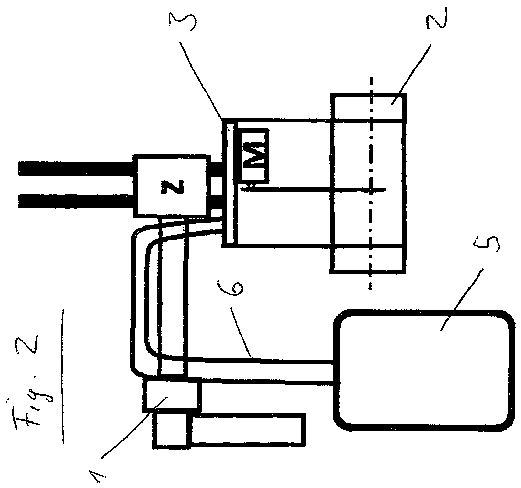

Fig. 2 eine schematische Seitenansicht einer Positioniervorrichtung (1) als Linearachssystem mit daran vertikal angeordneter Benetzungsbürstenwalze (2) zwischen den zu benetzenden Flächen der Einführhilfen (4) sowie den mit der Benetzungsbürstenwalze (2) in Verbindung stehenden Aufnahme-und Abgabesystem (3) für das Benetzungsmittel, der Ringleitung (6) zwischen dem Vorratsbehälter (5) für das Benetzungsmittel und der Bürste.

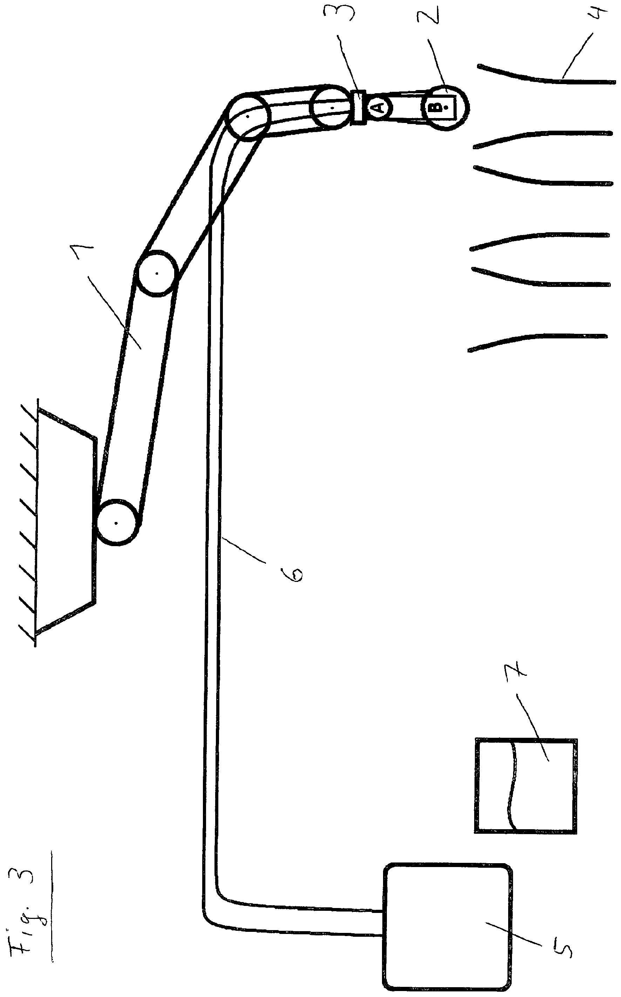

Fig. 3 eine schematische Ansicht einer Positioniervorrichtung (1) als Roboter-Handling-System mit am Roboterkopf angeordneter Beschichtungsbürste (2) zwischen den zu benetzenden Flächen der Einführhilfen (4) sowie den mit der Bürste (2) in Verbindung stehenden Aufnahme- und Abgabesystem (3) für das Benetzungsmittel, der Ringleitung (6) zwischen dem Vorratsbehälter (5) für das Benetzungsmittel und der Bürste.

### Ausführungsbeispiel 1:

Gemäß der Figuren 1 und 2 betrifft die Erfindung eine Vorrichtung zum Benetzen von Einfuhrhilfen 4 in Form einer Spreizvorrichtung für die Taschen eines Batteriegehäuses zum verbesserten Einboxen von Batterieplattenpaketen in diese Behälter- oder Rahmenkonstruktionen.

Dieses Benetzen dient der verbesserten Zuordnung der Plattenpakete in die Behälter- oder Rahmenkonstruktionen, den sogenannten Batteriegehäusen einer komplexen Fertigungsanlage. Vor allem soll der Abrieb und die Beschädigung der Batteriegehäuse und der Batterieplattenpakete sicher vermieden werden.

Dazu weist diese Vorrichtung zum Benetzen eine Positionsvorrichtung 1 zum lagegenauen Positionieren der Benetzungs- Vorrichtung an den zu benetzenden Innenwänden der Einfuhrhilfen auf.

Weiterhin verfügt die Vorrichtung über eine Benetzungsvorrichtung mit einem Versorgungssystem für das Benetzungsmittel und einer Reinigungsvorrichtung 7 für die Beschichtungsbürste.

In diesem Beispiel ist die Positioniervorrichtung 1 als Linearachssystem mit den Achsen X und Z ausgebildet, welches dadurch mit horizontalen als auch mit vertikalen Bewegungsabläufen ausgestattet ist. Am Ende der Positioniervorrichtung 1 ist eine Beschichtungsbürste 2 angeordnet, welche mit einem Benetzungsmittel-Versorgungssystem in Verbindung steht. Dieses Benetzungsmittel- Versorgungssystem besteht aus der Benetzungsmittelaufnahme 3 an der Beschichtungsbürste 2, welche über die Ringleitung 6 für die Benetzungsmittelzuführung mit dem Vorratsbehälter 5 in Verbindung steht, aus dem das Benetzungsmittel bereitgestellt wird. Die Beschichtungsbürste 2 ist mit einem zusätzlichen Antrieb A rotierend ausgebildet und ist deshalb zum Rotieren mit einem zusätzlichen Antrieb ausgestattet. Die Beschichtungsbürste 2 kann sowohl waagerecht oder senkrecht oder als schwenkbare Bürstenwalze am Ende des Linearsystems angeordnet und ausgebildet sein.

Die Beschichtungsbürste oder Bürstenwalze 2 ist weiterhin mit einem der Aufnahme und Abgabe des Benetzungsmittels dienenden Aufnahme- und Abgabesystem 3 ausgestattet.

Zur Versorgung der Beschichtungsbürste 2 mit dem Benetzungsmittel ist oberhalb der Beschichtungsbürste 2 ein Aufnahme-und Abgabesystem 3 zur Aufnahme und zum Übertrag des Benetzungsmittels auf die Borsten bzw. den Belag der Bürsten ausgebildet. Die Beschichtungsbürste 2 steht dazu für die Versorgung mit Benetzungsmittel über eine Ringleitung 6 mit einemvorgeschalteten und unter Druck stehenden Vorratsbehälter 5 in Verbindung. Als Benetzungsmittel wird bevorzugt ein flüssiges PTFE eingesetzt.

Damit ist diese Benetzungsvorrichtung vom übrigen System unabhängig versorgt und arbeitend. Zur Reinigung der Beschichtungsbürste 2 weist die Vorrichtung zum Benetzen zusätzlich eine Reinigungsvorrichtung 7 auf, wo die Bürste 2 über Schnellrotation und/oder einem Tauchbecken von alten Beschichtungsmitteln gereinigt und für den weiteren Einsatz aufbereitet werden kann.

Die Vorteile dieser Lösung liegen in einer autarken Versorgung der Benetzungsbürste 2 mit dem Benetzungsmittel, unabhängig von den anderen Verfahrensabläufen der Fertigungsanlage und einer dennoch in die Fertigungsanlage integrierten Zuführung als Positionsvorrichtung 1 zur Benetzung der Innenwänden der Einführhilfen beim Einboxen der Batterieplattenpakete in die Behälter- oder Rahmenkonstruktionen.

Dadurch werden sicher ein Beschädigen der Batterieplattenpakete und der Behälter- und Rahmenkonstruktion vermieden, ohne den eigentlichen Verfahrensablauf durch diese Maßnahme zu beeinträchtigen oder zeitlich zu beanspruchen.

### Ausführungsbeispiel 2:

Eine weitere Variante ist gemäß Fig. 3 die Ausbildung der Positioniervorrichtung 1 als Roboter-Handlingsystem, wobei die Beschichtungsbürste 2 der Benetzungsvorrichtung dabei am Roboterkopf angeordnet ist.

Die Beschichtungsbürste 2 wird über steuerbare Bewegungsabläufe von Roboterkopf und -arm an die zu benetzenden Stellen der Innenwände der Einfuhrhilfen 4 beim Einboxen der Batterieplattenpakete in die Behälter- oder Rahmenkonstruktionen herangeführt und positioniert. Die Beschichtungsbürste 2 ist rotierend ausgebildet und ist deshalb zum Rotieren mit einem zusätzlichen Antrieb A ausgestattet.

Die Beschichtungsbürste 2 kann sowohl waagerecht oder senkrecht am Roboterkopf angeordnet oder als schwenkbare Bürstenwalze ausgebildet sein.

Die Beschichtungsbürste oder Bürstenwalze 2 ist weiterhin mit einem der Aufnahme und Abgabe des Benetzungsmittels dienenden Aufnahme- und Abgabesystem 3 ausgestattet. Damit ist diese Benetzungsvorrichtung vom übrigen System unabhängig versorgt und arbeitend.

Zur Versorgung der Beschichtungsbürste 2 mit dem Benetzungsmittel ist oberhalb der Beschichtungsbürste 2 eine Benetzungsmittel- Aufhahme-und Abgabevorrichtung 3 zur Aufnahme und zum Übertrag des Benetzungsmittels auf die Borsten bzw. den Belag der Bürsten ausgebildet. Die Beschichtungsbürste 2 steht dazu für die Versorgung mit Benetzungsmittel über eine Ringleitung 6 mit einem vorgeschalteten und unter Druck stehenden Vorratsbehälter 5 in Verbindung. Als Benetzungsmittel wird bevorzugt ein flüssiges PTFE eingesetzt.

Zur Reinigung der Beschichtungsbürste 2 weist die Vorrichtung zum Benetzen zusätzlich eine Reinigungsvorrichtung 7 auf, wo die Bürste 2 über Schnellrotation und/oder einem Tauchbecken von alten Beschichtungsmitteln gereinigt und für den weiteren Einsatz aufbereitet werden kann.

Die Vorteile dieser Lösung liegen in einer autarken Versorgung der Benetzungsbürste 2 mit dem Benetzungsmittel, unabhängig von den anderen Verfahrensabläufen der Fertigungsanlage und einer zusätzlich und auch nachträglich an die Fertigungsanlage in zu installierenden Zuführung als Positionsvorrichtung 1 zur Benetzung der Greifvorrichtung zum Greifen von Batterieplattenpaketen zum Einboxen in Behälter- oder Rahmenkonstruktionen und /oder zum Benetzen der Behälter- oder Rahmenkonstruktionen.

Dadurch werden sicher sowohl ein Beschädigen der Batterieplattenpakete und auch der Behälter- und Rahmenkonstruktion vermieden, ohne den eigentlichen Verfahrensablauf durch diese Maßnahme zu beeinträchtigen oder zeitlich zu beanspruchen.

### Bezugszeichenliste

- 1: Positioniervorrichtung als Linearachssystem
- 2: Beschichtungsbürste
- 3: Benetzungsmittel- Aufnahme- und Abgabe an der Bürste
- 4: Einfuhrhilfen
- 5: Vorratsbehälter für das Benetzungsmittel
- 6: Ringleitung für die Benetzungsmittelzuführung
- 7: Reinigungsvorrichtung für Bürste
- A: Antrieb
- X,Z: Bewegungsachsen

## Patentansprüche

1. Vorrichtung zum Benetzen von Einfuhrhilfen für die verbesserte Zuordnung von Plattenpaketen außerhalb einer komplexen Fertigungsanlage mit Positionsvorrichtung zum lagegenauen Positionieren der Benetzungsvorrichtung an den zu benetzenden Innenwänden der Einführhilfen sowie einer Benetzungsvorrichtung mit einem Versorgungssystem für das Benetzungsmittel und einer Reinigungsvorrichtung für das Reinigen einer Beschichtungsbürste (2), wobei, die Positioniervorrichtung (1) als Linearachssystem ausgebildet ist, welches über separate Antriebe (A) für die Bewegungsachsen (X, Z) mit horizontalen als auch vertikalen Bewegungsabläufen ausgestattet ist und am Ende der Positioniervorrichtung (1) die Beschichtungsbürste (2) angeordnet ist, welche mit einem Benetzungsmittel- Versorgungssystem (3, 5 und 6) in Verbindung steht, und wobei die Beschichtungsbürste (2) zum Rotieren mit einem zusätzlichen Antrieb (A) ausgestattet ist, **dadurch gekennzeichnet, dass** zur Versorgung der Beschichtungsbürste (2) mit Benetzungsmittel ein oberhalb der Bürste (2) angeordnetes Aufnahme-/Abgabesystem (3) zur Aufnahme und zum Übertrag des Benetzungsmittels auf die Borsten bzw. den Belag der Bürsten ausgebildet ist.

2. Vorrichtung zum Benetzen von Einführhilfen für die verbesserte Zuordnung von Plattenpaketen außerhalb einer komplexen Fertigungsanlage mit Positionsvorrichtung zum lagegenauen Positionieren der Benetzungsvorrichtung an den zu benetzenden Innenwänden der Einführhilfen sowie einer Benetzungsvorrichtung mit einem Versorgungssystem für das Benetzungsmittel und einer Reinigungsvorrichtung für das Reinigen einer Beschichtungsbürste (2), wobei die Positioniervorrichtung (1) als Roboter- Handlingsystem ausgebildet ist und die Beschichtungsbürste (2) an dem Roboterkopf angeordnet ist und über steuerbare Bewegungsabläufe von Roboterkopf und -arm an die zu benetzenden Stellen der Einführhilfen (4) herangeführt und positioniert werden, und wobei die Beschichtungsbürste (2) zum Rotieren mit einem zusätzlichen Antrieb (A) ausgestattet ist, **dadurch gekennzeichnet, dass** zur Versorgung der Beschichtungsbürste (2) mit Benetzungsmittel ein oberhalb der Bürste (2) angeordnetes Aufnahme-/Abgabesystem (3) zur Aufnahme und zum Übertrag des Benetzungsmittels auf die Borsten bzw. den Belag der Bürsten ausgebildet ist.

3. Vorrichtung zum Benetzen von Einführhilfen nach Anspruch 2 **dadurch gekennzeichnet, dass** die Bürste (2) als waagerecht oder senkrecht angeordnete oder als schwenkbare Bürstenwalze ausgebildet ist.

4. Vorrichtung zum Benetzen von Einfuhrhilfen nach einem der Ansprüche 1 und 2 sowie 3, **dadurch gekennzeichnet, dass** die Bürste oder Bürstenwalze (2) mit einem der Aufnahme des Benetzungsmittels ausgestatteten eigenen Aufnahme- und Abgabesystem (3) ausgestattet ist.

5. Vorrichtung zum Benetzen von Einfuhrhilfen nach einem der Ansprüche 1 und 2 sowie 4 **dadurch gekennzeichnet, dass** die Bürste (2) für die Versorgung mit Benetzungsmittel über eine Ringleitung (6) mit einem vorgeschaltetem und mit Druck beaufschlagten Vorratsbehälter (7) in Verbindung steht.

6. Vorrichtung zum Benetzen von Einfuhrhilfen nach einem der Ansprüche 1 und 2 sowie 4 und 5 **dadurch gekennzeichnet, dass** eine der Reinigung der Bürste (2) dienende Reinigungsvorrichtung (7) als zusätzlicher Behälter zum rotierenden Abtrennen der Benetzungs-, Verunreinigungs- und Abriebrückstände und/oder in einer im Behälter angeordneten Reinigungsflüssigkeit zum Abspülen der Rückstände, angeordnet ist.

7. Vorrichtung zum Benetzen von Einfuhrhilfen nach einem der Ansprüche 1 und 2 sowie 4 bis 6 **dadurch gekennzeichnet, dass** das Benetzungsmittel ein flüssiges PTFE ist.

## Claims

1. Apparatus for wetting of inserting aids for the improved allocation of plate assemblies outside a complex fabrication system having positioning apparatus for accurate positioning of the wetting apparatus at the internal walls, to be wetted, of the inserting aids, as well as a wetting apparatus having a supply system for the wetting agent and a cleaning apparatus for the cleaning of a coating brush (2), wherein the positioning apparatus (1) is designed as a linear axis system, which is equipped via separate drives (A) for the movement axes (X, Z) with horizontal and also vertical movement sequences, and the coating brush (2), which is in communication with a wetting-agent supply system (3, 5 and 6), is disposed at the end of the positioning apparatus (1), and wherein the coating brush (2) is equipped with an additional drive (A) for rotation, **characterized in that** for supply of the coating brush (2) with wetting agent, a receiving/delivery system (3) disposed above the brush (2) is constructed for receiving and for transfer of the coating agent onto the bristles or the lining of the brushes.

2. Apparatus for wetting of inserting aids for the improved allocation of plate assemblies outside a complex fabrication system having positioning apparatus for accurate positioning of the wetting apparatus at the internal walls, to be wetted, of the inserting aids, as well as a wetting apparatus having a supply system for the wetting agent and a cleaning apparatus for the cleaning of the coating brush (2), wherein the positioning apparatus (1) is designed as a robotic handling system and the coating brush (2) is disposed on the robotic head and brought up to and positioned at the places to be wetted of the inserting aids (4) via controllable movement sequences of robotic head and arm, and wherein the coating brush (2) is equipped with an additional drive (A) for rotation, **characterized in that** for supply of the coating brush (2) with wetting agent, a receiving/delivery system (3) disposed above the brush (2) is constructed for receiving and for transfer of the coating agent onto the bristles or the lining of the brushes.

3. Apparatus for wetting of inserting aids according to claim 2, **characterized in that** the brush (2) is designed as a brush roller that is horizontally or vertically disposed and/or is swivelable.

4. Apparatus for wetting of inserting aids according to any one of claims 1 and 2 as well as 3, **characterized in that** the brush or brush roller (2) is equipped with a receiving and delivery system (3) of its own equipped for receiving the wetting agent.

5. Apparatus for wetting of inserting aids according to any one of claims 1 and 2 as well as 4, **characterized in that,** for the supply with wetting agent, the brush (2) is in communication via a ring line (6) with a reservoir container (7) disposed upstream and kept under pressure.

6. Apparatus for wetting of inserting aids according to any one of claims 1 and 2 as well as 4 and 5, **characterized in that** a cleaning apparatus (7) functioning for cleaning of the brush (2) is disposed as an additional container for rotary separation of the wetting, soiling and abrasion residues and/or in a cleaning fluid, disposed in the container, for flushing out the residues.

7. Apparatus for wetting of inserting aids according to any one of claims 1 and 2 as well as 4 to 6, **characterized in that** the wetting agent is a liquid PTFE.

## Revendications

1. Dispositif pour humidifier des aides à l'insertion afin d'améliorer l'agencement de paquets de plaques à l'extérieur d'une installation de fabrication complexe, comprenant un dispositif de positionnement pour positionner avec précision le dispositif d'humidification sur les parois intérieures à humidifier des aides à l'insertion, ainsi qu'un dispositif d'humidification avec un système d'alimentation pour l'agent mouillant et un dispositif de nettoyage pour nettoyer une brosse de revêtement (2), le dispositif de positionnement (1) étant conçu comme un système à axe linéaire équipé d'entraînements séparés (A) pour les axes de mouvement (X, Z) avec des séquences de mouvements horizontaux et verticaux, et la brosse de revêtement (2) étant disposée à l'extrémité du dispositif de positionnement (1), laquelle est reliée à un système d'alimentation en agent mouillant (3, 5 et 6), et la brosse de revêtement (2) est équipée d'un entraînement supplémentaire (A) pour tourner, **caractérisé en ce que,** pour alimenter la brosse de revêtement (2) en agent mouillant, un système de réception/distribution (3) est disposé au-dessus de la brosse (2) pour recevoir et transférer l'agent mouillant sur les poils ou le revêtement des brosses.

2. Dispositif pour humidifier des aides à l'insertion afin d'améliorer l'agencement de paquets de plaques à l'extérieur d'une installation de fabrication complexe, comprenant un dispositif de positionnement pour positionner avec précision le dispositif d'humidification sur les parois intérieures à humidifier des aides à l'insertion, ainsi qu'un dispositif d'humidification avec un système d'alimentation pour l'agent mouillant et un dispositif de nettoyage pour nettoyer une brosse de revêtement (2), le dispositif de positionnement (1) étant conçu comme un système de manipulation robotisé et la brosse de revetement (2) étant disposée sur la tête du robot et amenée et positionnée sur les endroits à mouiller des aides à l'insertion (4) grâce à des séquences de mouvements contrôlables de la tête et du bras du robot, et la brosse de revêtement (2) est équipée d'un entraînement supplémentaire (A) pour tourner, **caractérisé en ce que,** pour alimenter la brosse de revêtement (2) en agent mouillant, un système de réception/distribution (3) est disposé au-dessus de la brosse (2) pour recevoir et transférer l'agent mouillant sur les poils ou le revêtement des brosses.

3. Dispositif pour humidifier des aides à l'insertion selon la revendication 2, **caractérisé en ce que** la brosse (2) est conçue comme un rouleau-brosse disposé horizontalement ou verticalement ou comme un rouleau-brosse pivotant.

4. Dispositif pour humidifier des aides à l'insertion selon l'une des revendications 1 et 2 ainsi que 3, **caractérisé en ce que** la brosse ou le rouleau-brosse (2) est équipé d'un système de réception et de distribution (3) propre, qui est prévu pour recevoir l'agent mouillant.

5. Dispositif pour humidifier des aides à l'insertion selon l'une des revendications 1 et 2 ainsi que 4, **caractérisé en ce que** la brosse (2) est reliée, pour l'alimentation en agent mouillant, à un réservoir (7) placé en amont et alimenté en pression via une conduite circulaire (6).

6. Dispositif pour humidifier des aides à l'insertion selon l'une des revendications 1 et 2 ainsi que 4 et 5, **caractérisé en ce qu'**un dispositif de nettoyage (7) servant au nettoyage de la brosse (2) est disposé en tant que récipient supplémentaire pour séparer par rotation les résidus de mouillage, d'impuretés et d'abrasion et/ou dans un liquide de nettoyage disposé dans le récipient pour rincer les résidus.

7. Dispositif pour mouiller des aides à l'insertion selon l'une des revendications 1 et 2 ainsi que 4 à 6, **caractérisé en ce que** l'agent mouillant est un PTFE liquide.
